# FASCICULE DE BREVET EUROPEEN

(11) **EP 2 545 831 B1**
(45) Date de publication et mention de la délivrance du brevet: **15.04.2015**
(21) Numéro de dépôt: 12174853.7
(22) Date de dépôt: 03.07.2012
(51) Int. Cl.: A47J 43/07, A23C 11/10

(54) **Appareil électroménager de préparation culinaire comportant un outil décentré**
Elektrohaushaltsgerät zur Essenszubereitung mit einem dezentrierten Werkzeug
Kitchen appliance with an off-centre tool

(30) Priorité: 13.07.2011 FR 1156439
(43) Date de publication de la demande: 16.01.2013
(73) Titulaire: SEB S.A., 69130 Ecully (FR)
(72) Inventeur: Perrier, Matthieu, 26000 Valence (FR); Bourgeois-Jacquet, Jean-Marie, 21850 Saint-Apollinaire (FR)
(74) Mandataire: Cémeli, Eric Philippe Laurent

(56) Documents cités:
- EP-A1- 2 071 990
- US-A- 3 318 583
- US-A- 5 323 973

## Description

La présente invention se rapporte au domaine technique des appareils électroménagers de préparation culinaire prévus pour la réalisation de préparations liquides.

La présente invention concerne notamment, mais non exclusivement, les appareils de fabrication de lait de soja et/ou de soupe.

Le document CN201207895U divulgue une machine à lait de soja comprenant un bol cylindrique surmonté par une tête qui comporte un moteur dont un axe s'étend verticalement vers le bas pour plonger un couteau disposé vers son extrémité inférieure au sein du bol, de sorte de pouvoir broyer du soja et préparer un lait de soja. Cet axe de cet outil rotatif se trouve très légèrement décentré au sein du bol. D'autre part, la base de la machine sur laquelle repose le bol est équipée d'un dispositif chauffant. Cette machine pour fabriquer du lait de soja présente comme inconvénient principal un volume du bol très important, qui la rend encombrante.

Un appareil selon le préambule de la revendication 1 est connu du document EP2071990.

Le but général de l'invention est de fournir une solution améliorée de fabrication de préparations culinaires liquides, notamment de lait de soja ou de soupe.

Plus précisément, l'invention cherche à définir un appareil électroménager de préparation culinaire prévu pour la réalisation de préparations culinaires liquides atteignant tout ou partie des objets suivants :
- un bol peu encombrant et facile à manipuler ;
- un mélange efficace de la préparation en limitant les risques de débordement ;

- un dispositif chauffant performant ;
- un dispositif démontable, facile à nettoyer.

A cet effet, l'invention repose sur un appareil électroménager de préparation culinaire comme défini dans la revendication 1, prévu pour la réalisation de préparations liquides, notamment pour la fabrication de lait de soja et/ou de soupe, comprenant un axe pour le maintien et l'actionnement d'un outil apte à agir sur un mélange positionné au sein d'un bol, l'axe étant agencé de manière décentrée dans le bol, dans lequel le bol présente une forme allongée et l'axe est décentré par rapport à la longueur du bol, le bol présente une forme allongée entre une première paroi la plus éloignée de l'axe et une seconde paroi la plus proche de l'axe, la première paroi étant arrondie, du fait que la seconde paroi est plane ou sensiblement plane. Cette disposition permet d'utiliser un bol étroit qui peut être plus facilement rangé dans un réfrigérateur. Cette disposition permet également de réduire l'encombrement en largeur de l'appareil. La forme non circulaire du bol permet en outre d'augmenter l'effet du décentrement de l'outil, ce qui contribue à améliorer le mélange de la préparation. La première paroi arrondie permet de limiter les turbulences et ainsi de réduire les risques de débordement, la deuxième paroi plane ou sensiblement plane permet de favoriser le mélange de la préparation ainsi que la compacité de l'appareil.

Avantageusement, le rapport entre la largeur et la longueur du bol est compris entre 0,33 et 0,75. Cette disposition permet de favoriser le mélange de la préparation, tout en présentant un encombrement réduit.

Avantageusement encore, le rapport entre la largeur et la longueur du bol est compris entre 0,4 et 0,66. Cette disposition permet d'optimiser le mélange de la préparation.

Avantageusement encore, la largeur du bol est inférieure ou égale à 12 cm, et de préférence inférieure ou égale à 10 cm. Cette disposition permet de faciliter le rangement du bol dans un réfrigérateur, voire d'envisager le rangement du bol dans la porte d'un réfrigérateur.

Avantageusement encore, le bol comporte une poignée agencée du côté opposé à l'outil. Cette disposition permet de réduire l'encombrement en largeur de l'appareil.

Avantageusement encore, le décentrage de l'axe est tel que l'outil laisse libre au moins un tiers de la longueur du bol, et de préférence au moins la moitié de la longueur du bol. Cette disposition contribue à l'efficacité du mélange de la préparation.

Avantageusement encore, l'appareil comprend un couvercle technique amovible coopérant avec le bol, le couvercle technique portant l'axe et présentant un deuxième dispositif d'accouplement au niveau de son extrémité supérieure. Cette disposition permet de faciliter la manipulation de l'outil porté par l'axe. Le couvercle technique peut être remplacé par un couvercle de conservation après la réalisation de la préparation. En alternative, l'axe pourrait notamment être issu d'un boîtier motorisé reposant sur le bol.

Avantageusement alors, le couvercle technique porte un filtre dans lequel se trouve l'outil. Cette disposition convient notamment pour la réalisation de lait de soja.

Avantageusement encore, le couvercle technique comprend une ouverture supérieure pour permettre le remplissage en eau, et/ou légumes ou céréales du bol et/ou du filtre. Cette disposition permet de faciliter l'utilisation de l'appareil. Cette disposition est facilitée par le positionnement décentré de l'axe.

Avantageusement encore, le couvercle technique comprend au moins une sonde de sécurité comprenant un connecteur électrique dans son extrémité supérieure au niveau de la surface supérieure du couvercle technique. Cette disposition permet de simplifier la construction et l'utilisation de l'appareil.

Selon une forme de réalisation, le couvercle technique comprend un dispositif chauffant s'étendant au moins partiellement au sein du bol et comprenant un connecteur électrique au niveau de la surface supérieure du couvercle technique. Cette disposition permet d'utiliser un bol dépourvu de moyens de chauffe intégrés.

Selon un mode de réalisation, l'appareil comprend un socle comprenant une base pour recevoir le bol, une colonne latérale et une branche supérieure pour venir au-dessus du bol. Cette disposition permet d'agencer les moyens d'entraînement de l'outil dans le socle.

Avantageusement alors, la base comprend un dispositif chauffant. Cette disposition permet d'utiliser un bol dépourvu de moyens de chauffe intégrés.

Avantageusement encore, le bol est en matériau métallique, comme de l'acier inoxydable, ou le bol comprend un matériau métallique et un fond diffuseur comme un fond en aluminium. Cette disposition permet d'envisager le chauffage ou le réchauffage de la préparation avec un bol placé sur une plaque chauffante, agencée si désiré dans la base. Cette disposition contribue à faciliter le nettoyage de l'appareil.

Ces objets, caractéristiques et avantages de la présente invention seront exposés en détail dans la description suivante d'un mode de réalisation particulier fait à titre non-limitatif en relation avec les figures jointes parmi lesquelles :
- La figure 1 représente une vue en perspective d'un appareil électroménager de préparation culinaire prévu pour la réalisation de préparations liquides, notamment pour la fabrication de lait de soja et/ou de soupe, en configuration de fonctionnement, selon un mode de réalisation de l'invention,
- La figure 2 représente une vue de côté de l'appareil illustré sur la figure 1 en configuration rehaussée, le bol étant représenté en transparence,
- La figure 3 représente une vue en perspective de l'appareil illustré sur les figures 1 et 2 démonté,
- La figure 4 représente une vue en perspective avec transparence de l'appareil illustré sur les figures 1 à 3 en configuration rehaussée,
- La figure 5 représente une vue schématique de dessus du bol de l'appareil illustré sur les figures 1 à 4,
- La figure 6 représente une vue de côté en coupe du bol de l'appareil illustré sur les figures 1 à 4,
- La figure 7 représente une vue en perspective démontée d'une variante de réalisation de l'appareil illustré sur les figures 1 à 4.

Un mode de réalisation d'un appareil électroménager de préparation culinaire prévu pour la réalisation de préparations liquides, notamment pour la fabrication de lait de soja et/ou de soupe, va maintenant être décrit.

Dans les figures, l'axe x sera utilisé pour désigner une direction longitudinale horizontale, orientée dans la longueur du bol de l'appareil, l'axe y désignera l'axe horizontal transversal, perpendiculaire à l'axe x, et l'axe z désignera la direction verticale, orientée vers le haut.

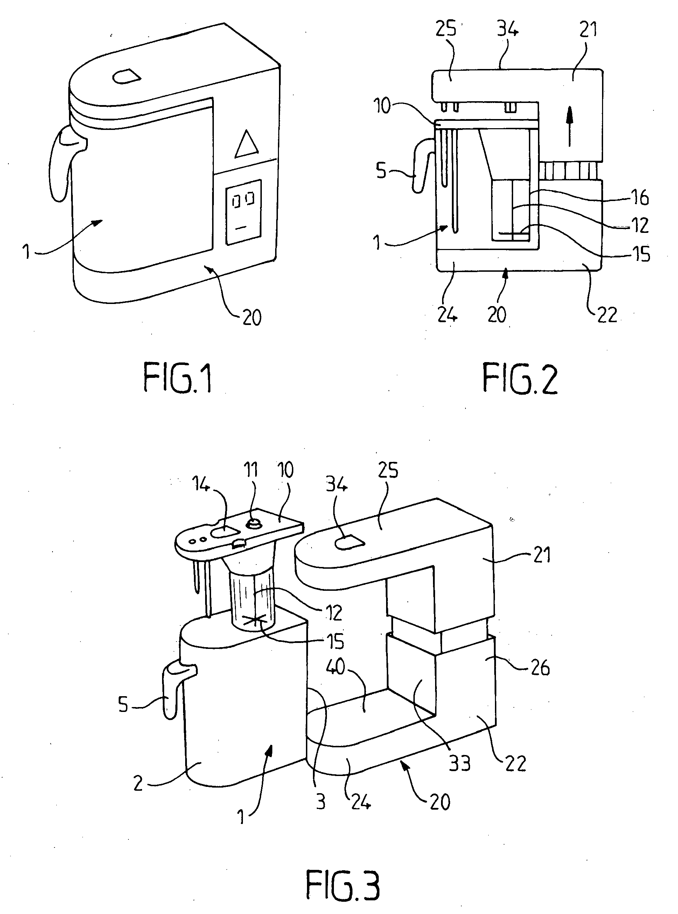

La figure 1 représente une vue en perspective de côté de l'appareil en configuration de fonctionnement. Cet appareil comprend un bol 1 présentant une forme allongée.

L'appareil selon le mode de réalisation illustré sur les figures comprend un socle 20 comprenant une base 40 pour recevoir le bol 1, une colonne latérale 26 et une branche supérieure 25 pour venir au-dessus du bol 1. Le bol 1 est disposé dans le socle 20.

La figure 2 représente une configuration intermédiaire de l'appareil, dans laquelle une partie supérieure 21 du socle 20 est soulevée par rapport à une partie inférieure 22 du socle 20 de sorte de pouvoir libérer le bol 1 qui peut être inséré ou retiré. Nous appellerons par la suite « configuration rehaussée » cette configuration intermédiaire du socle 20. Tel que visible sur la figure 2, l'appareil comprend un axe 12 pour le maintien et l'actionnement d'un outil 15 apte à agir sur un mélange positionné au sein du bol 1. L'axe 12 est agencé de manière décentrée dans le bol 1. Le bol 1 comporte une poignée 5 agencée du côté opposé à l'outil 15.

La figure 3 représente schématiquement une configuration démontée de l'appareil. Le bol 1 est retiré du socle 20, resté en configuration rehaussée. D'autre part, l'appareil comprend un couvercle technique 10 amovible coopérant avec le bol 1. Le couvercle technique 10, disposé de manière amovible sur la partie haute du bol 1, est retiré par le haut du bol 1. Le couvercle technique 10 porte l'axe 12. En vue de la réalisation de lait de soja, le couvercle technique 10 porte un filtre 16 dans lequel se trouve l'outil 15.

Les différents composants de l'appareil selon le mode de réalisation vont maintenant être décrits plus en détail.

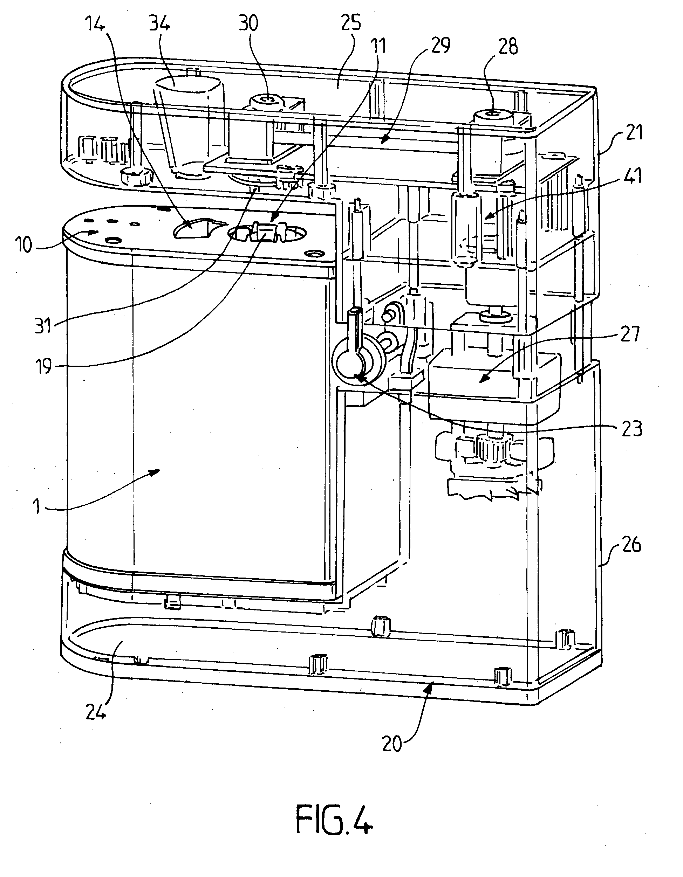

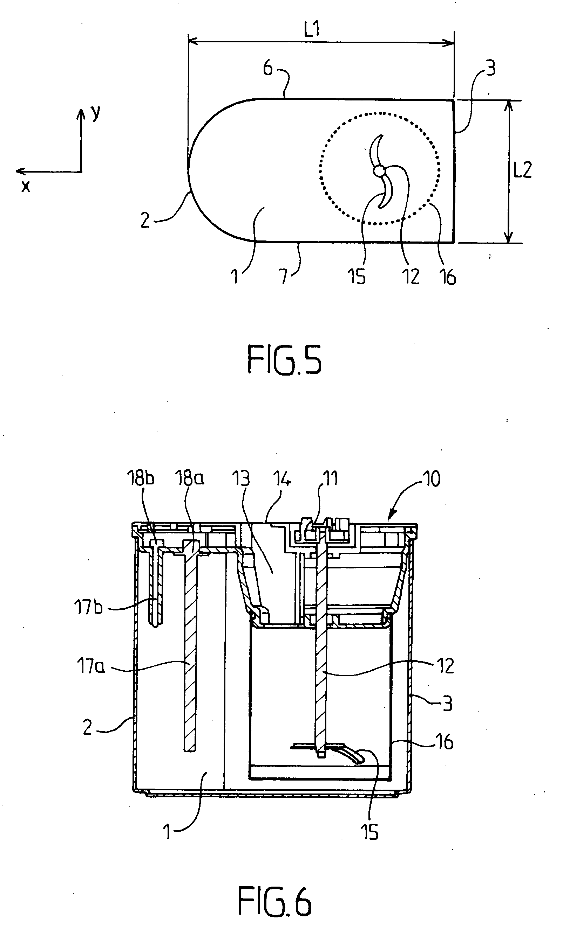

La figure 4 montre ainsi plus précisément les différents éléments qui composent le socle 20 de l'appareil alors que la figure 6 illustre les éléments composant le bol 1 et son couvercle technique 10. Ce socle 20 présente une forme en U basculé, dont une branche inférieure 24 forme la base 40 de réception du bol 1 et la branche supérieure 25 forme un élément apte à coopérer avec le couvercle technique 10 en configuration de fonctionnement de l'appareil, comme cela sera précisé par la suite. Ces deux branches 24, 25 sont reliées par la colonne latérale 26, de section rectangulaire, qui s'étend verticalement contre une paroi latérale 3 du bol, lui servant de butée lorsque le bol 1 est dans son positionnement de fonctionnement. De plus, comme cela a été décrit ci-dessus, la partie supérieure 21 du socle 20, qui comprend la branche supérieure 25 et sensiblement la moitié supérieure de la colonne latérale 26, est mobile en translation verticale par rapport à la partie inférieure 22 du socle 20, qui comprend la base 40 et sensiblement la moitié inférieure de la colonne latérale 26, par l'intermédiaire d'un bouton d'actionnement manuel 23 dont une surface de came vient en appui contre une surface correspondante de la partie supérieure 21 du socle 20 pour mettre en oeuvre son mouvement de translation verticale. La figure 4 représente la configuration rehaussée de ce socle 20, dans laquelle la partie supérieure 21 occupe une position haute.

Selon ce mode de réalisation, la base 40 du socle 20 comprend un dispositif chauffant, non représenté sur les figures, qui permet de chauffer la préparation présente dans le bol 1.

De plus, le socle 20 comporte un dispositif d'entraînement destiné à l'actionnement de l'outil 15 au sein du bol 1, comme cela sera précisé par la suite. Le dispositif d'entraînement comprend un moteur 27 agencé dans la colonne latérale 26, plus particulièrement dans la partie supérieure 21 mobile du socle 20. A cet effet, le socle 20 comprend un agencement de liaison qui permet de relier le moteur 27 à l'axe 12 vertical du couvercle technique 10 s'étendant dans le bol 1. L'agencement de liaison comprend ainsi un premier axe de transmission 28 vertical entraîné par le moteur 27 par l'intermédiaire d'un dispositif de transmission 41. Le premier axe de transmission 28 est relié par une courroie de transmission 29 à un second axe de transmission 30 vertical comprenant dans sa partie inférieure un premier dispositif d'accouplement 31 apte à coopérer avec un deuxième dispositif d'accouplement 11 correspondant de l'axe 12, disposé dans une ouverture du couvercle technique 10. Ainsi le couvercle technique 10 présente le deuxième dispositif d'accouplement 11 au niveau de son extrémité supérieure. Dans la configuration rehaussée du socle 20 telle que représentée, les premier et deuxième dispositifs d'accouplement 31, 11 ne sont pas accouplés. Lorsque la partie supérieure 21 du socle 20 est abaissée vers la configuration de fonctionnement, les premier et deuxième dispositifs d'accouplement 31, 11 viennent automatiquement s'accoupler. Le fonctionnement du moteur 27 agencé au sein du socle 20 permet ainsi la mise en rotation du premier axe de transmission 28, qui entraîne la rotation du second axe de transmission 30 par l'intermédiaire de la courroie de transmission 29, qui entraîne la rotation de l'axe 12 présent dans le couvercle technique 10 par les premier et deuxième dispositifs d'accouplement 31, 11 lorsque l'appareil est en configuration de fonctionnement.

En remarque, l'axe 12 du couvercle technique 10 est décentré par rapport au bol, comme cela sera détaillé par la suite, de manière à réduire au maximum la longueur de la courroie de transmission 29. Cette caractéristique permet de plus de libérer un espace sur la surface du couvercle technique 10, qui est exploité par un dispositif de remplissage du couvercle technique 10, qui repose sur un orifice de remplissage 14 disposé dans la surface supérieure du couvercle technique 10, disposée en vis-à-vis d'une ouverture 34 de forme sensiblement conique aménagée dans la branche supérieure 25 du socle 20. Ce dispositif de remplissage permet de remplir directement le filtre 16 entourant l'outil 15 rotatif du couvercle technique 10 en configuration de fonctionnement de l'appareil. Il permet d'alimenter l'appareil en eau, en graines, et/ou en légumes en cours de cuisson. En variante ou complément, il permet d'évacuer les éventuelles vapeurs du bol 1 vers l'extérieur.

La colonne 26 comprend de plus un volume suffisant dans sa partie inférieure pour disposer une carte électronique, non représentée, comprenant les composants électroniques utilisés pour le fonctionnement de l'appareil, qui peut en effet comprendre différents programmes de fonctionnement et contrôles, interfaces homme machine, mis en oeuvre par des moyens matériels (hardware) et/ou logiciels (software).

Selon une variante de réalisation non représentée, la branche supérieure 25 du socle 20 et le couvercle technique 10 peuvent comprendre au moins une seconde ouverture et un second orifice de remplissage dans leur partie avant pour permettre le remplissage direct du bol 1, par exemple par de l'eau. Dans une telle variante, il est aussi possible d'alimenter le bol avec des légumes qui ne doivent pas être mixés. Selon une autre variante de réalisation non représentée, la branche supérieure 25 ne s'étend pas nécessairement jusqu'au(x) orifice(s) de remplissage 14. Ainsi le couvercle technique 10 comprend au moins un orifice de remplissage 14 accessible lorsque le bol 1 portant le couvercle technique 10 est en place dans le socle 20. Avantageusement, au moins un des orifices de remplissage 14 du couvercle technique 10 permet de remplir le filtre 16.

Le filtre 16 utilisé notamment pour la préparation de lait de soja est avantageusement amovible et peut être remplacé si désiré par un simple déviateur de flux tel que par exemple décrit dans le document EP1836905, pour la préparation de lait de soja, ou encore pour la préparation de soupe. A titre de variante, l'appareil ne comporte pas nécessairement un filtre 16.

La figure 5 représente schématiquement le bol 1 en vue de dessus. Sa section présente une forme allongée, c'est-à-dire que sa longueur L1 mesurée dans la direction longitudinale x est plus grande que sa largeur L2 mesurée dans la direction transversale y. Le décentrage de l'axe 12 est tel que l'outil 15 laisse libre au moins un tiers de la longueur du bol 1, et de préférance au moins la moitié de la longueur du bol 1. D'autre part, le bol 1 présente une forme allongée entre une première paroi 2 la plus éloignée de l'axe 12 et une seconde paroi 3 la plus proche de l'axe 12. La première paroi 2 est arrondie, par exemple semi-circulaire. La seconde paroi 3 est plane ou sensiblement plane. La seconde paroi 3 vient en butée contre une paroi plane correspondante 33 du socle 20 en position de fonctionnement. Le bol 1 présente des parois latérales 6, 7 avantageusement parallèles entre elles et perpendiculaires à la seconde paroi 3. La poignée 5 est liée à la première paroi 2 formant la face avant du bol 1, pour faciliter sa manipulation. Le bol 1 peut être en matériau métallique, par exemple en acier inoxydable, et peut comporter un fond diffuseur, par exemple en aluminium.

En remarque, la forme allongée de ce bol 1 est avantageuse puisqu'elle permet son positionnement dans le rangement d'une porte de réfrigérateur par exemple. Pour cela, la largeur L2 du bol est avantageusement inférieure ou égale à 12 cm, et de préférence inférieure ou égale à 10 cm. De plus, comme le bol 1 est entièrement dissociable de tous les autres composants de l'appareil, il est parfaitement adapté pour une manipulation conviviale, légère, peu encombrante et représente une solution idéale pour le stockage du produit fabriqué obtenu suite au fonctionnement de l'appareil. Son faible encombrement est aussi avantageux pour son logement et utilisation sur un plan de travail, et le rend compatible avec des cuisines étroites. En remarque, le socle 20 présente une forme correspondant à celle du bol 1, et notamment une largeur équivalente, ce qui rend l'ensemble de l'appareil peu encombrant, compatible avec les cuisines de petite taille. Le fait que le moteur 27 soit positionné latéralement permet d'éviter un encombrement important dans une direction verticale.

Naturellement, le bol 1 peut présenter d'autres formes allongées sans sortir du cadre de l'invention. Notamment, tout rapport entre sa largeur L2 et sa longueur L1 inférieur à 0,75 est avantageux. Ce rapport sera ainsi avantageusement choisi entre 0,33 et 0,75, et de préférence entre 0,4 et 0,66. La première paroi 2 du bol 1 la plus éloignée de l'outil 15 est avantageusement arrondie.

Le positionnement de l'axe 12 de l'outil 15, lié au couvercle technique 10, est aussi illustré sur cette figure 5. Il apparaît que cet axe 12 est décentré par rapport au centre C positionné à égale distance des deux parois 2, 3. En effet, cet axe 12 est plus rapproché de la surface arrière du bol 1, et donc de la colonne 26 et du moteur 27, comme mentionné précédemment. Ainsi l'axe 12 est décentré par rapport à la longueur (L1) du bol 1. En remarque, cette configuration permet un positionnement de l'outil 15 à proximité de la deuxième paroi 3 plane du bol 1, ce qui est favorable à la trajectoire du mélange lors de la rotation de l'outil 15 et permet d'atteindre une performance importante. Plus précisément, le rapprochement de l'outil 15 des trois parois 3, 6, 7 en zone arrière du bol 1 permet de créer des turbulences lors de l'écoulement de produit qu'il provoque, qui favorisent la préparation recherchée. Selon une réalisation avantageuse, ce décentrage permet à l'outil 15 rotatif de laisser libre au moins un tiers de la longueur du bol 1, voire même la moitié de cette longueur.

Le bol 1 et son couvercle technique 10 amovible sont plus particulièrement représentés par la figure 6. Cette dernière montre en coupe les différents éléments du couvercle technique 10 présents au sein du volume du bol 1 lors du fonctionnement de l'appareil. On distingue donc l'axe de rotation 12 qui s'étend sensiblement sur toute la hauteur du bol 1 pour localiser l'outil 15, qui est un couteau pour broyer le soja ou tout légume dans cette réalisation, vers la surface inférieure du bol 1. Cet axe 12 comprend un dispositif d'accouplement 11 dans sa partie supérieure, comme cela a été explicité précédemment. Ensuite, l'orfice de remplissage 14 du couvercle technique 10 permet l'accès au filtre 16 par une conduite de remplissage 13 débouchant dans le bol 1. Cela permet le remplissage des graines de soja dans le filtre 16 de cet appareil. Ce filtre 16 comprend une paroi avec des petites ouvertures, de dimensions prévues pour laisser s'échapper le lait de soja lorsqu'il a été formé par le travail de l'outil 15. En remarque, le couvercle technique 10 comprend de plus deux sondes 17a, 17b prévues pour remplir des fonctions de sécurité, respectivement pour détecter une absence d'eau dans le bol 1 et pour détecter la formation de mousse. Ces deux sondes 17a, 17b comprennent des connecteurs électriques 18a, 18b dans leur partie supérieure, au niveau de la surface supérieure du couvercle technique 10. Cette construction présente l'avantage de permettre le retrait de l'ensemble des éléments fonctionnels qui sont présents à l'intérieur du bol 1 pendant la fabrication du lait de soja, par le simple retrait du couvercle technique 10. Tous ces éléments sont ensuite dissociables et peuvent être aisément lavés, simplement par l'intermédiaire d'un lave-vaisselle par exemple.

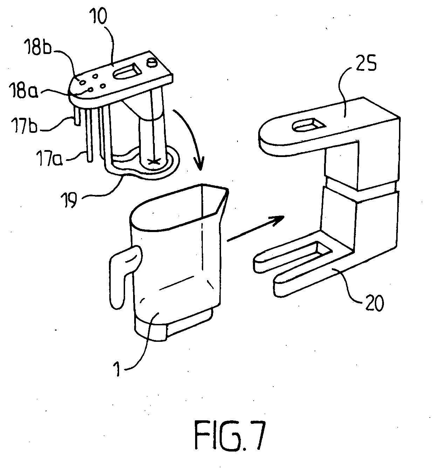

La figure 7 représente une variante de réalisation, dans laquelle le dispositif chauffant n'est plus présent dans la base 40 du socle 20, dont la forme est simplifiée et ne comporte plus que des éléments de guidage latéraux. Dans cette variante, le dispositif chauffant est obtenu par une résistance chauffante 19 fixée au couvercle technique 10 et s'étendant au sein du bol 1. Cette résistance chauffante 19 présente une connexion électrique sur la surface supérieure du couvercle technique 10, apte à une liaison électrique automatique avec la branche supérieure 25 du socle 20 en configuration de fonctionnement. Ainsi le couvercle technique 10 comprend un dispositif chauffant s'étendant au moins partiellement au sein du bol 1 et comprenant un connecteur électrique au niveau de la surface supérieure du couvercle technique 10.

Si désiré, le couvercle technique 10 peut comprendre au moins une sonde 17a, 17b de sécurité comprenant un connecteur électrique 18a, 18b dans son extrémité supérieure au niveau de la surface supérieure du couvercle technique 10.

Si désiré, la branche supérieure 25 peut comprendre au moins un connecteur électrique pour une sonde 17a, 17b et/ou un dispositif chauffant.

Le fonctionnement de l'appareil ainsi décrit est très convivial. En effet, le bol est indépendant de tous les autres composants de l'appareil et présente une forme et un volume avantageux, comme cela a été explicité précédemment. Il permet d'éviter un contact permanent de la préparation avec des composants techniques de l'appareil, ce qui favorise la conservation et le stockage de cette préparation dans le bol 1. De plus, la forme du bol le rend compatible avec son utilisation au sein d'un réfrigérateur conventionnel.

Le bol 1 est prévu pour son logement dans un socle, dont un léger mouvement vers le bas permet d'obtenir automatiquement et simultanément la connexion mécanique de l'axe de rotation de l'outil de l'appareil, ainsi que des connexions électriques, ainsi que la formation d'une ou plusieurs conduite(s) de remplissage.

Les éléments techniques qui viennent en contact avec la préparation pendant le fonctionnement de l'appareil sont tous montés de manière amovible par rapport au socle, ce qui permet aisément leur retrait pour les laver efficacement. De plus, le couvercle technique portant l'outil rotatif est indépendant de la motorisation, qui est agencée dans un boîtier distinct du couvercle technique, ce qui facilite grandement le nettoyage des parties de l'appareil en contact avec les aliments. Le boîtier logeant le moteur ne vient plus en contact avec la préparation, ce qui est très positif car son nettoyage est délicat. D'autre part, son déplacement au niveau latéral est avantageux, comme cela a été mentionné précédemment.

En remarque, l'invention ne se limite naturellement pas au mode de réalisation décrit précédemment et de nombreuses variantes peuvent être imaginées dans les limitations des revendications, comme un agencement de liaison différent entre le moteur et l'axe du bol, une variante simplifiée sans dispositif de chauffage, un couvercle technique non amovible, etc.

## Revendications

1. Appareil électroménager de préparation culinaire prévu pour la réalisation de préparations liquides, notamment pour la fabrication de lait de soja et/ou de soupe, comprenant un axe (12) pour le maintien et l'actionnement d'un outil (15) apte à agir sur un mélange positionné au sein d'un bol (1), l'axe (12) étant agencé de manière décentrée dans le bol (1), le bol (1) présentant une forme allongée et l'axe (12) étant décentré par rapport à la longueur (L1) du bol (1), le bol (1) présentant une forme allongée entre une première paroi (2) la plus éloignée de l'axe (12) et une seconde paroi (3) la plus proche de l'axe (12), la première paroi (2) étant arrondie, **caractérisé en ce que** la seconde paroi (3) est plane ou sensiblement plane.

2. Appareil électroménager de préparation culinaire selon la revendication 1, **caractérisé en ce que** le rapport entre la largeur (L2) et la longueur (L1) du bol (1) est compris entre 0,33 et 0,75.

3. Appareil électroménager de préparation culinaire selon l'une des revendications 1 ou 2, **caractérisé en ce que** le rapport entre la largeur (L2) et la longueur (L1) du bol (1) est compris entre 0,4 et 0,66.

4. Appareil électroménager de préparation culinaire selon l'une des revendications 1 à 3, **caractérisé en ce que** la largeur (L2) du bol (1) est est inférieure ou égale à 12 cm, et de préférence inférieure ou égale à 10 cm.

5. Appareil électroménager de préparation culinaire selon l'une des revendications 1 à 4, **caractérisé en ce que** le bol (1) comporte une poignée (5) agencée du côté opposé à l'outil (15).

6. Appareil électroménager de préparation culinaire selon l'une des revendications 1 à 5, **caractérisé en ce que** le décentrage de l'axe (12) est tel que l'outil (15) laisse libre au moins un tiers de la longueur du bol (1), et de préférence au moins la moitié de la longueur du bol (1).

7. Appareil électroménager de préparation culinaire selon l'une des revendications 1 à 6, **caractérisé en ce qu'**il comprend un couvercle technique (10) amovible coopérant avec le bol (1), le couvercle technique (10) portant l'axe (12) et présentant un deuxième dispositif d'accouplement (11) au niveau de son extrémité supérieure.

8. Appareil électroménager de préparation culinaire selon la revendication 7, **caractérisé en ce que** le couvercle technique (10) porte un filtre (16) dans lequel se trouve l'outil (15).

9. Appareil électroménager de préparation culinaire selon l'une des revendications 7 ou 8, **caractérisé en ce que** le couvercle technique (10) comprend une ouverture (14) supérieure pour permettre le remplissage en eau, et/ou légumes ou céréales du bol (1) et/ou du filtre (16).

10. Appareil électroménager de préparation culinaire selon l'une des revendications 7 à 9, **caractérisé en ce que** le couvercle technique (10) comprend au moins une sonde (17a, 17b) de sécurité comprenant un connecteur électrique (18a, 18b) dans son extrémité supérieure au niveau de la surface supérieure du couvercle technique (10).

11. Appareil électroménager de préparation culinaire selon l'une des revendications 7 à 10, **caractérisé en ce que** le couvercle technique (10) comprend un dispositif chauffant s'étendant au moins partiellement au sein du bol (1) et comprenant un connecteur électrique au niveau de la surface supérieure du couvercle technique (10).

12. Appareil électroménager de préparation culinaire selon l'une des revendications 1 à 11, **caractérisé en ce qu'**il comprend un socle (20) comprenant une base (40) pour recevoir le bol (1), une colonne latérale (26) et une branche supérieure (25) pour venir au-dessus du bol (1).

13. Appareil électroménager de préparation culinaire selon la revendication 12, **caractérisé en ce que** la base (40) comprend un dispositif chauffant.

14. Appareil électroménager de préparation culinaire selon l'une des revendications 1 à 13, **caractérisé en ce que** le bol (1) est en matériau métallique, comme de l'acier inoxydable, ou le bol (1) comprend un matériau métallique et un fond diffuseur comme un fond en aluminium.

## Patentansprüche

1. Elektrohaushaltsgerät zur Zubereitung von Speisen, vorgesehen für die Herstellung flüssiger Zubereitungen, insbesondere für die Herstellung von Sojamilch und/oder Suppe, mit einer Achse (12) zum Halten und Betätigen eines Werkzeugs (15), das dazu geeignet ist, auf ein in einem Gefäß (1) befindliches Gemisch einzuwirken, wobei die Achse (12) exzentrisch in dem Gefäß (1) angeordnet ist, wobei das Gefäß (1) eine längliche Form aufweist und die Achse (12) in Bezug auf die Länge (L1) des Gefäßes (1) exzentrisch ist und wobei das Gefäß (1) zwischen einer ersten Wand (2), die von der Achse (12) am weitesten entfernt ist, und einer zweiten Wand (3), die der Achse (12) am nächsten liegt, eine längliche Form aufweist, wobei die erste Wand (2) abgerundet ist, **dadurch gekennzeichnet, dass** die zweite Wand (3) eben oder im Wesentlichen eben ist.

2. Elektrohaushaltsgerät zur Zubereitung von Speisen nach Anspruch 1, **dadurch gekennzeichnet, dass** das Verhältnis zwischen der Breite (L2) und der Länge (L1) des Gefäßes (1) zwischen 0,33 und 0,75 beträgt.

3. Elektrohaushaltsgerät zur Zubereitung von Speisen nach einem der Ansprüche 1 oder 2, **dadurch gekennzeichnet, dass** das Verhältnis zwischen der Breite (L2) und der Länge (L1) des Gefäßes (1) zwischen 0,4 und 0,66 beträgt.

4. Elektrohaushaltsgerät nach einem der Ansprüche 1 bis 3, **dadurch gekennzeichnet, dass** die Breite (L2) des Gefäßes (1) maximal 12 cm und vorzugsweise maximal 10 cm beträgt.

5. Elektrohaushaltsgerät zur Zubereitung von Speisen nach einem der Ansprüche 1 bis 4, **dadurch gekennzeichnet, dass** das Gefäß (1) einen Griff (5) aufweist, der auf der dem Werkzeug (15) gegenüberliegenden Seite angeordnet ist.

6. Elektrohaushaltsgerät zur Zubereitung von Speisen nach einem der Ansprüche 1 bis 5, **dadurch gekennzeichnet, dass** die exzentrische Anordnung der Achse (12) derart gestaltet ist, dass das Werkzeug (15) zumindest ein Drittel der Länge des Gefäßes (1) und vorzugsweise zumindest die Hälfte der Länge des Gefäßes (1) frei lässt.

7. Elektrohaushaltsgerät zur Zubereitung von Speisen nach einem der Ansprüche 1 bis 6, **dadurch gekennzeichnet, dass** es einen Deckel (10) mit technischen Funktionen umfasst, der abnehmbar mit dem Gefäß (1) zusammenwirkt, wobei der Deckel (10) mit technischen Funktionen die Achse (12) trägt und eine zweite Kupplungsvorrichtung (11) an seinem oberen Ende aufweist.

8. Elektrohaushaltsgerät zur Zubereitung von Speisen nach Anspruch 7, **dadurch gekennzeichnet, dass** der Deckel (10) mit technischen Funktionen einen Filter (16) trägt, in dem sich das Werkzeug (15) befindet.

9. Elektrohaushaltsgerät zur Zubereitung von Speisen nach einem der Ansprüche 7 oder 8, **dadurch gekennzeichnet, dass** der Deckel (10) mit technischen Funktionen eine obere Öffnung (14) aufweist, die das Einfüllen von Wasser und/oder Gemüse oder Körnern in das Gefäß (1) und/oder den Filter (16) gestattet.

10. Elektrohaushaltsgerät zur Zubereitung von Speisen nach einem der Ansprüche 7 bis 9, **dadurch gekennzeichnet, dass** der Deckel (10) mit technischen Funktionen zumindest einen Sicherheitsfühler (17a, 17b) mit einem elektrischen Anschluss (18a, 18b) in seinem oberen Ende auf Höhe der Oberseite des Deckels (10) mit technischen Funktionen umfasst.

11. Elektrohaushaltsgerät zur Zubereitung von Speisen nach einem der Ansprüche 7 bis 10, **dadurch gekennzeichnet, dass** der Deckel (10) mit technischen Funktionen eine Heizvorrichtung umfasst, die sich zumindest teilweise in dem Gefäß (1) erstreckt und auf Höhe der Oberseite des Deckels (10) mit technischen Funktionen einen elektrischen Anschluss umfasst.

12. Elektrohaushaltsgerät zur Zubereitung von Speisen nach einem der Ansprüche 1 bis 11, **dadurch gekennzeichnet, dass** es einen Sockel (20) mit einer Basis (40) zur Aufnahme des Gefäßes (1), eine seitliche Stütze (26) und einen oberen Arm (25) zur Überdeckung des Gefäßes (1) umfasst.

13. Elektrohaushaltsgerät zur Zubereitung von Speisen nach Anspruch 12, **dadurch gekennzeichnet, dass** die Basis (40) eine Heizvorrichtung umfasst.

14. Elektrohaushaltsgerät zur Zubereitung von Speisen nach einem der Ansprüche 1 bis 13, **dadurch gekennzeichnet, dass** das Gefäß (1) aus einem metallischen Werkstoff wie z. B. Edelstahl gefertigt ist oder dass das Gefäß (1) einen metallischen Werkstoff und einen Diffusorboden wie z. B. einen Aluminiumboden umfasst.

## Claims

1. Food preparation household electrical appliance intended for the production of liquid preparations, especially for the manufacture of soy milk and/or soup, comprising a shaft (12) for holding and actuating a tool (15) adapted to act on a mixture positioned in a bowl (1), the shaft (12) being arranged offset in the bowl (1), the bowl (1) having an elongated shape and the shaft (12) being offset with respect to the length (L1) of the bowl (1), the bowl (1) having an elongated shape between a first wall (2) further from the shaft (12) and a second wall (3) closer to the shaft (12), the first wall (2) being rounded, **characterised in that** the second wall (3) is flat or substantially flat.

2. Food preparation household electrical appliance according to claim 1, **characterised in that** the ratio between the width (L2) and the length (L1) of the bowl (1) is between 0.33 and 0.75.

3. Food preparation household electrical appliance according to claim 1 or 2, **characterised in that** the ratio between the width (L2) and the length (L1) of the bowl (1) is between 0.4 and 0.66.

4. Food preparation household electrical appliance according to one of claims 1 to 3, **characterised in that** the width (L2) of the bowl (1) is less than or equal to 12 cm, and preferably less than or equal to 10 cm.

5. Food preparation household electrical appliance according to one of claims 1 to 4, **characterised in that** the bowl (1) has a handle (5) formed on the side opposite the tool (15).

6. Food preparation household electrical appliance according to one of claims 1 to 5, **characterised in that** the offset of the shaft (12) is such that the tool (15) leaves at least one third of the length of the bowl (1) free, and preferably at east half of the length of the bowl (1) free.

7. Food preparation household electrical appliance according to one of claims 1 to 6, **characterised in that** it comprises a removable technical lid (10) cooperating with the bowl (1), the technical lid (10) carrying the shaft (12) and having a second coupling device (11) at its upper end.

8. Food preparation household electrical appliance according to claim 7, **characterised in that** the technical lid (10) carries a filter (16) containing the tool (15).

9. Food preparation household electrical appliance according to claim 7 or 8, **characterised in that** the technical lid (10) comprises an upper opening (14) to fill the bowl (1) and/or the filter (16) with water and/or vegetables or cereals.

10. Food preparation household electrical appliance according to one of claims 7 to 9, **characterised in that** the technical lid (10) comprises at least a safety probe (17a, 17b) having an electrical connector (18a, 18b) in its upper end on the upper surface of the technical lid (10).

11. Food preparation household electrical appliance according to one of claims 7 to 10, **characterised in that** the technical lid (10) comprises a heating device extending at least partially inside the bowl (1) and comprising an electrical connector on the upper surface of the technical lid (10).

12. Food preparation household electrical appliance according to one of claims 1 to 11, **characterised in that** it comprises a support (20) having a base (40) to receive the bowl (1), a side column (26) and an upper branch (25) to come above the bowl (1).

13. Food preparation household electrical appliance according to claim 12, **characterised in that** the base (40) comprises a heating device.

14. Food preparation household electrical appliance according to one of claims 1 to 13, **characterised in that** the bowl (1) is made of a metallic material, such as stainless steel, or **in that** the bowl (1) comprises a metallic material and a diffuser bottom such as an aluminium bottom.
